# EUROPÄISCHE PATENTSCHRIFT

(11) **EP 0 421 078 B1**
(45) Veröffentlichungstag und Bekanntmachung des Hinweises auf die Patenterteilung: **19.05.1993**
(21) Anmeldenummer: 90114735.5
(22) Anmeldetag: 01.08.1990
(51) Int. Cl.: A22C 17/04

(54) **Einrichtung zum Beschicken von Passiermaschinen**
Supply device for separating machine
Dispositif d'amenée pour machine séparatrice

(30) Priorität: 06.10.1989 DE 8911890 U
(43) Veröffentlichungstag der Anmeldung: 10.04.1991
(73) Patentinhaber: NORDISCHER MASCHINENBAU RUD. BAADER GMBH + CO KG, 23560 Lübeck (DE)
(72) Erfinder: Kunig, Helmut, D-2407 Bad Schwartau (DE); Rose, Wolfgang, D-2406 Eckhorst (DE)

(56) Entgegenhaltungen:
- BE-A- 530 045
- DE-A- 2 032 774
- DE-A- 2 818 710
- FR-A- 1 118 289
- US-A- 2 547 234
- US-A- 3 396 768
- US-A- 3 786 536

## Beschreibung

Die Erfindung betrifft eine Einrichtung zum Beschicken von Maschinen zum Trennen von miteinander vermischten fließfähigen und nicht fließfähigen Bestandteilen, insbesondere von kontinuierlich arbeitenden Preßband-Passiermaschine, umfassend einen ersten und einen zweiten Rotationskörper, die im Beschickbereich der Preßband-Passiermaschine in einem Gehäuse gelagert und gegenläufig angetrieben sind, wobei der erste Rotationskörper mehrere beabstandet nebeneinander und koaxial angeordnete Kreismesser umfaßt und der zweite Rotationskörper mit zwischen die Kreismesser eintauchbaren Vorsprüngen versehen ist.

Einrichtungen solchen Aufbaus sind aus dem Stand der Technik bekannt.

So ist beispielsweise aus dem JP-GM 26-7881 eine Einrichtung zu entnehmen, die neben der Aufgabe der Erzeugung eines Stopfeffektes auch diejenige einer Egalisierung und Vorzerkleinerung des Beschickgutes hat. Dies geschieht durch Ausstattung der Rotationskörper mit aus ihrer Mantelfläche aufragenden, sichelförmigen Mitnehmerarmen, und Anordnung der Walzen so, daß die Umlaufkreise der Mitnehmerarme einander überdecken.

Bei dieser Einrichtung ist nachteilig, daß je nach Art und Form des Beschickgutes einerseits eine Wickelbildung an den Rotationskörpern nicht vermeidbar ist und andererseits ein nicht regulierbarer, von der Art des Beschickgutes abhängiger Stopfeffekt erzeugt wird, der zu einer Überladung der nachfolgenden Bearbeitungsmaschine führen kann.

In der DE-OS 20 32 774 ist weiter ein Verfahren offenbart, welches zum Ziel hat, großstückiges Beschickgut zu einer "Matte" umzuformen, die dann einer Preßband-Passiermaschine zugeführt werden soll. Dazu wird ein Paar gegensinnig umlaufend angetriebener Walzen eingesetzt, die das Verarbeitungsgut entsprechend ihrem eingestellten Abstand zueinander zu einer Matte gleicher Stärke walzen soll. Gedacht war diese Einrichtung zur Verarbeitung insbesondere knochenhaltigen Gutes.

Dieses Konzept hat sich nicht bewährt, da auch hier die Mitnahmefähigkeit der Walzen von der jeweiligen Art des Beschickgutes abhängig unterschiedlich ist, d. h. eine Dosierung der Beschickungsmenge nicht möglich ist.

Es sei weiter auf die US-PS 3 396 768 hingewiesen, aus der eine Zweistufen-Crusher-Einrichtung zur Egalisierung der Stückengröße des Verarbeitungsgutes entnehmbar ist.

In der DE-A-28 18 710 ist weiter eine Vorrichtung zum Einschneiden von Fleisch im Kreuzschnitt beschrieben. Vorgesehen sind zwei gleichsinnig angetriebene hintereinandergeschaltete Messerwalzen, wobei eine derselben mit parallel zu der Drehachse angeordneten Kammessern und die andere mit Messerscheiben versehen ist. Beiden Messerwalzen liegen durch Riffelung ihrer Mantelflächen griffige Förderwalzen gegenüber, die gegen Federkraft verdrängbar angeordnet sind.

Schließlich ist aus der BE 530 045 eine Maschine zum Zartmachen von Fleischscheiben bekannt. Diese weist mindestens ein Paar zusammenwirkender Walzen auf, wobei eine derselben mehrere beabstandet nebeneinander angeordnete Kreismesser umfaßt und die andere mit zwischen diese eintauchbaren Vorsprüngen versehen ist. Diese Vorsprünge sind über den ganzen Umfang des Walzenkörpers verteilt, so daß beim Umlauf der Walzen ein stetiger, fördernder Angriff an den Bearbeitungsgut sichergestellt ist.

Es ist die Aufgabe der vorliegenden Erfindung, eine universelle Beschickeinrichtung anzugeben, welche in der Lage ist, sowohl großstückiges, knochenfreies Fleischmaterial, beispielsweise ganze entbeinte Rinderwaden, als auch Bearbeitungsgut unterschiedlicher Gestalt und Stückengröße der Bearbeitungsmaschine einerseits sicher zuzuführen und andererseits Überladung bzw. Brücken- und/oder Wickelbildung auszuschließen.

Diese Aufgabe wird erfindungsgemäß dadurch gelöst, daß der zweite Rotationskörper als Prismenkörper mit höchstens zwei Flügeln ausgebildet ist, die mit radialen Eintauchschlitzen für die Kreismesser versehen und bei Ausführung mit zwei Flügeln im sind, und daß Federmittel zum gegeneinander Verspannen der beiden Rotationskörper unter vorbestimmbarer Kraft vorgesehen sind.

Der damit erzielbare Vorteil besteht im wesentlichen darin, daß das Bearbeitungsgut ohne Reißen und Zerren in eine netzartige zusammenhängende "Matte" umgeformt wird, die quasi intermittierend in den Einzugsbereich der nachgeschalteten Maschine vorgeschoben wird. Die jeweils bei Annäherung der Flügel des zweiten Rotationskörpers an den ersten sich ergebene Förderphase wird nämlich nach Durchgang der Flügel durch die Kreismesser von einer bezüglich der Förderung indifferenten Phase unterbrochen, bis der nächste Flügel in Eingriff kommt, so daß sich etwaige Stauungen hinter der Beschickeinrichtung ausgleichen können, oder von der Bearbeitungsmaschine erfaßtes Material durch die Beschickeinrichtung hindurchgezogen werden kann.

Bei Einsatz der erfindungsgemäßen Einrichtung in Verbindung mit einer Preßband-Passiermaschine ergab sich bei insgesamt gesteigertem Durchsatz eine verbesserte Laufruhe dieser Maschine und eine günstigere Energiebilanz bei wesentlich vergleichmäßigtem Leistungspegel des Antriebsmotors.

Zur Verbesserung der Förderkomponente kann der Rotationskörper derart ausgebildet sein, daß der jeweils den bzw. die Flügel bildende Steg in der Form eines Zahnkamms eines pfeilverzahnten Zahnrades ausgebildet ist, wobei der "Pfeil" gegen die Drehrichtung des Rotationskörpers weist.

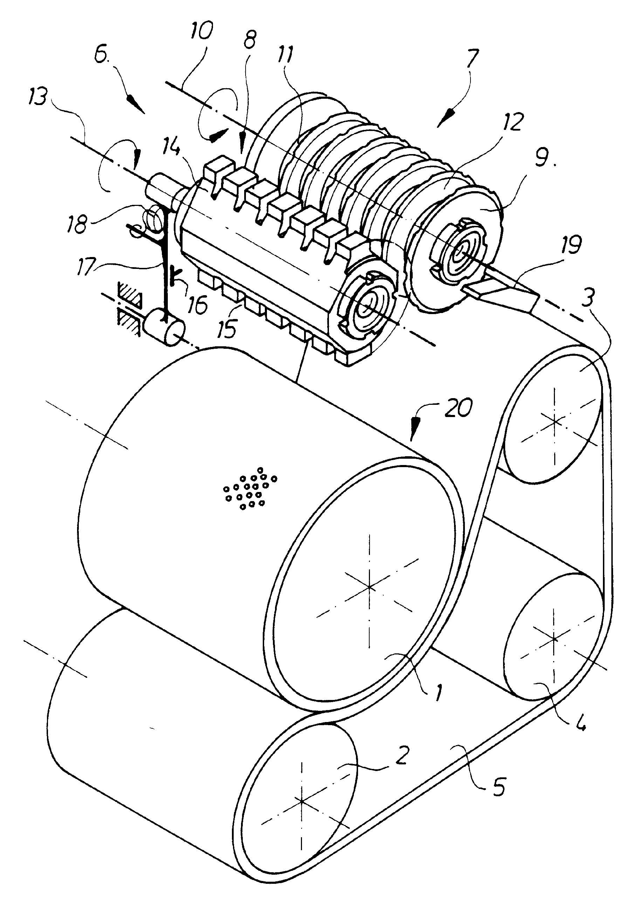

Die erfindungsgemäße Einrichtung wird nachfolgend anhand eines in der Zeichnung dargestellten Ausführungsbeispiels näher erläutert.

In einem nicht gezeigten Gestell einer Preßband-Passiermaschine mit einem mittels einer Anpreßwalze 2 an eine Lochtrommel 1 angepreßbaren und über Umlenkwalzen 3 und 4 endlos geführten Preßband 5 ist oberhalb der Einzugstelle zwischen diesem und der Lochtrommel 1 eine Beschickeinrichtung 6 angeordnet. Sie besteht aus einem Paar, auf geeignete Weise gegenläufig angetriebener Rotationskörper 7 und 8 , deren erster 7 einen Satz Kreismesser 9 umfaßt, die auf einer gemeinsamen Achse 10 montiert sind und durch Distanzringe 11 unter Bildung von Zwischenräumen 12 zwischen sich auf Abstand zueinander gehalten werden. Der zweite Rotationkörper 8 ist als um eine Achse 13 umlaufender Prismenkörper ausgebildet, dessen Querschnitt im dargestellten Beispiel zwei einander gegenüberliegende und sich radial erstreckende Flügel 14 aufweist, die zu der Achse 13 parallel verlaufende Stege bilden. Die Flügel 14 sind mit radialen Eintauchschlitzen 15 versehen, in die die Kreismesser 9 des Rotationskörpers 7 eintauchen. Die Eintauchtiefe ist über einen Anschlag 16 einstellbar, der die an einem Lenker 17 angeordnete Achse 13 gegen eine krafteinstellbare Zugfeder 18 abstützt und in der Grundstellung dafür sorgt, daß die Flügel 14 bis zu einem gewissen Abstand zu der Peripherie der Distanzringe 11 zwischen die Kreismesser 9 eintauchen. Im unteren Bereich des Rotationskörpers 7 ist ein ebenfalls zwischen die Kreismesser 9 eintauchender Abstreiferkamm 19 angeordnet.

Die Wirkungsweise der Einrichtung wird nachstehend beschrieben, indem ein Bearbeitungsgut auf seinem Weg durch die Maschine verfolgt wird. Dabei wird die spezielle Wirkungsweise der erfindungsgemäßen Beschickeinrichtung 6 besonders deutlich bei der Verarbeitung ganzer entbeinter Rinderwaden, die in den die Beschickeinrichtung 6 umgebenden, nicht gezeigten Aufnahmetrichter aufgegeben werden. Dabei lastet die Rinderwade mit ihrem Gewicht auf den beiden Rotationskörpern 7 und 8 und wird schließlich bei Annäherung eines Flügels 14 an die Kreismesser 9 gegen diese gedrängt und durch die vorauslaufende Schulter des Flügels 14 dem Einzugkeil 20 der Preßband-Passiermaschine zugefördert. Während des Eintauchens der Flügel 14 zwischen die Kreismesser 9 durchschneiden diese das Bearbeitungsgut, so daß, da die Flügel 14 ihre Eintauchstellung nur während eines Teils ihres Umlaufes innehaben, Durchschnitte in begrenzter Länge in dem Bearbeitungsgut entstehen. Während des Austauchens eines Flügels 14 reduziert sich zunächst der vorschiebende Angriff an dem Bearbeitungsgut ebenso wie die radiale Verdrängung desselben gegen die Kreismesser 9, so daß in dieser Phase lediglich die Durchschnitte fortsetzende Einschnitte gemacht werden, mindestens sofern die Dicke des Bearbeitungsgutes größer als der Abstand der Nabe des Rotationskörpers 8 von den Schneiden der Kreismesser 9 ist. Es folgt dann der nächste Flügel 14 , so daß sich der beschriebene Zyklus wiederholt.

Härtere Bestandteile, z. B. Sehnen, Knorpel etc., bewirken, daß der Rotationskörper 8 je nach Einstellung der Kraft der Zugfeder 18 verdrängt und damit die Belastung der Kreismesser 9 begrenzt wird. Die elastische Abstützung 18 kann auch durch ein hydrauliches System mit integriertem Gasspeicher erfolgen, dessen Druck den jeweiligen Bedürfnissen z. B. mittels einer Handpumpe angepaßt werden kann.

Aufgrund dieser Behandlung wird das Bearbeitungsgut in eine hochflexible "Matte" aus netzartig zusammenhängenden Teilen umgeformt, die von der Passiermaschine ohne weiteres eingezogen werden kann, und die eine schonende Arbeit der Maschine bei hoher Durchsatzleistung garantiert.

Bei der Verarbeitung relativ großer Fleischteile, wie die genannten Rinderwaden, ergibt sich durch die beschriebene Wirkung der Beschickeinrichtung 6 weiter der Vorteil, daß das Wadenstück nach Erfassen in dem Einzugkeil 20 jeweils im Rhythmus des wechselnden Eingriffs der Flügel 14 schrittweise durch die Beschickeinrichtung 6 hindurchgezogen wird. Andererseits kann bei der Durchsatzleistung der Passiermaschine übersteigender Beschickleistung infolge der rhythmisch nicht zwangsläufigen Förderwirkung der Beschickeinrichtung 6 ein rhythmischer Ausgleich des dann vor dem Einzugkeil 20 entstehenden Stau's stattfinden.

Zur Verbesserung der Förderwirkung der Beschickeinrichtung 6 können die die Flügel 14 bildenden Stege des Rotationskörpers 8 nach Art des Zahnkamms eines pfeilverzahnten Zahnrades verlaufen, wobei der "Pfeil" gegen die Drehrichtung des Rotationskörpers 8 weist.

## Patentansprüche

1. Einrichtung zum Beschicken von Maschinen zum Trennen von miteinander vermischten fließfähigen und nicht fließfähigen Bestandteilen, insbesondere von kontinuierlich arbeitenden Preßband-Passiermaschinen, umfassend einen ersten (7) und einen zweiten Rotationskörper (8) , die im Beschickbereich der Preßband-Passiermaschine in einem Gehäuse gelagert und gegenläufig angetrieben sind, wobei der erste Rotationskörper (7) mehrere beabstandet nebeinander und koaxial angeordnete Kreismesser (9) umfaßt und der zweite Rotationskörper (8) mit zwischen die Kreismesser (9) eintauchbaren Vorsprüngen versehen ist, **dadurch gekennzeichnet,** daß der zweite Rotationskörper (8) als Prismenkörper mit höchstens zwei Flügeln (14) ausgebildet ist, die mit radialen Eintauchschlitzen für die Kreismesser (9) versehen und bei Ausführung mit zwei Flügeln im wesentlichen einander sind, und daß Federmittel (18) zum gegeneinander Verspannen der beiden Rotationskörper (7 und 8) unter vorbestimmbarer Kraft vorgesehen sind.

2. Einrichtung nach Anspruch 1, **dadurch gekennezeichnet,** daß der jeweils den bzw. die Flügel (14) bildende Steg in der Form eines Zahnkammes eines pfeilverzahnten Zahnrades verlaufend ausgebildet ist, wobei der "Pfeil" gegen die Drehrichtung des Rotationskörpers (8) weist.

## Claims

1. Equipment for the loading of machines for separating of intermixed flowable and non-flowable components, especial ly of continuously operating press band sieving machines, comprising a first (7) and a second (8) rotational body, which are mounted in a housing in the loading region of the press band sieving machine and driven in opposite sense, wherein the first rotational body (7) comprises several circular knives (9) arranged coaxially and adjacent to one another at spacings apart and the second rotational body (8) is provided with projections able to dip in between the circular knives (9), characterised thereby that the second rotational body (8) is constructed as prismatic body with at most two vanes (14), which are provided with radial insertion slots for the circular knives (9) and which are arranged, in the case of execution with two vanes, substantially opposite one another, and that spring means (18) are provided for the mutual bracing of the two rotational bodies (7 and 8) by a predeterminable force.

2. Equipment according to claim 1, characterised thereby that the web (14) forming the or each vane (14) is constructed extending in the form of a tooth cog of a herringbone-toothed gear wheel, wherein the "herringbone" points against the rotational direction of the rotational body (8).

## Revendications

1. Dispositif pour le chargement de machine pour la séparation de composants coulants et non coulants mélangés entre eux, en particulier de hachoirs à viande à bande de compression travaillant en continu, comprenant un premier (7) et un deuxième (8) corps tournants qui sont logés dans la région de chargement du hachoir à viande à bande de compression dans un boîtier et qui sont entraînés en sens contraire, le premier corps de rotation (7) comprenant plusieurs couteaux circulaires (9) disposés côte-à-côte à distance l'un de l'autre et de manière coaxiale et le deuxième corps de rotation (8) étant pourvu de saillies susceptibles de plonger entre les couteaux circulaires (9), caractérisé en ce que le deuxième corps tournant (8) est réalisé sous forme de corps à prismes comprenant au plus deux ailettes (14) qui sont pourvues de fentes radiales de plongée pour les couteaux circulaires (9) et sont disposées, dans le mode de réalisation avec deux ailettes, sensiblement l'une en face de l'autre, et en ce que des moyens de ressort (18) sont prévus pour contraindre l'un vers l'autre les deux corps de rotation (7 et 8) sous une force prédéterminée.

2. Dispositif selon la revendication 1, caractérisé en ce que la barrette constituant chaque fois l'ailette ou les ailettes (14) est réalisée sous forme d'un peigne denté passant le long d'une roue dentée à denture en forme de flèche, la "flèche" étant tournée en sens opposé au sens de rotation du corps tournant (8).
